# EUROPEAN PATENT SPECIFICATION

(11) **EP 3 890 471 B1**
(45) Date of publication and mention of the grant of the patent: **06.05.2026**
(21) Application number: 19821215.1
(22) Date of filing: 06.12.2019
(51) Int. Cl.: A01G 24/15, A01G 24/25, A01G 24/48

(54) **BIODEGRADABLE FOAM SUBSTRATE FOR GROWING PLANTS, PLANT SYSTEM PROVIDED THEREWITH, AND METHOD FOR MANUFACTURING SUCH SUBSTRATE**
BIOLOGISCH ABBAUBARES SCHAUMSUBSTRAT FÜR PFLANZEN, ANPFLANZUNGSSYSTEM MIT ENTSPRECHENDEM SCHAUMSUBSTRAT UND VERFAHREN ZUR HERSTELLUNG EINES SOLCHEN SUBSTRATES
SUBSTRAT DE MOUSSE BIODÉGRADABLE POUR LA COISSANCE DE PLANTES, SYSTÈME DE PLANTE FOURNI AVEC CELUI-CI ET PROCÉDÉ DE FABRICATION D'UN TEL SUBSTRAT

(30) Priority: 07.12.2018 NL 2022153
(43) Date of publication of application: 13.10.2021
(73) Proprietor: Foamplant B.V., 9743 AJ Groningen (NL)
(72) Inventor: TIETEMA, Martin, 9712 BS Groningen (NL); BELJAARS, Martijn, 9743 TN Groningen (NL); VAN ASSEN, Vincent, 9725 JT Groningen (NL); STANKUTE, Ineta, 9742 BH Groningen (NL)
(74) Representative: Arnold & Siedsma
(86) International application number: PCT/NL2019/050811
(87) International publication number: WO 2020/117062

(56) References cited:
- WO-A2-02/076187
- US-A1- 2013 180 173
- US-B2- 9 521 814

## Description

The present invention relates to a biodegradable foam substrate for growing plants.

In practice, substrates are used for growing plants in stead of using soil. Such substrates for growing plants are known from hydroponic, semi-hydroponic, hydroculture and similar systems, wherein plants are grown in an alternative medium that transports water, fertilizer and other relevant components. Such (growing) systems can be applied in glasshouses/greenhouses, for example. In practice, substrate material is made from a synthetic material, such as rockwool made from an inorganic fibre material or peat/PUR, or is made from degradable/compostable material, such as compressed cocos plugs or compost plugs with a polymer sheet. The roots of the plant penetrate into the substrate and fixate the plant. Often, feed systems provide water, fertilizer and other relevant components to the plant roots to enable plant growth.

US 9,521,814 B2 discloses a growth substrate for plants including polylactic acid, wherein the polylactic acid is particulate polylactic acid foam. A method for preparing a growth substrate for plants including polylactic acid foam, the method including providing particulate expandable polylactic acid and exposing the particulate expandable polylactic acid to predetermined temperature and pressure conditions to obtain particulate polylactic acid foam.

US 2013/0180173 A1 discloses a composition and method for preparing artificial seeds of plantlets that can be developed into grown plants for propagation in the field**.**

In one embodiment, the artificial seeds are developed in degradable containers.

WO 02/076187 A2 discloses a culture medium that is suitable for growing plants and that comprises a filler and a polymer. The culture medium is characterised in that it is made of a polymerised mixture containing a biologically degradable polymer and the filler.

One of the problems with such synthetic substrates relates to the fact that these substrates may contain undesired (agro) chemicals that render it difficult to dispose of this substrate material. Furthermore, plugs of synthetic substrates are often too wet for optimal root growth. In addition, in practice one is confronted with the non sustainability of such materials of this substrate material and the fact that the material is often easily damaged.

Specific problems of rockwool, is that rockwool can cause root diseases and that it is harmful during manual handling. Peat/PUR is known to potentially clog the water infrastructure and has a complicated nutrient composition.

Problems with such degradable/compostable substrates relates to the fact that these substrates may contain an undesired composition which is hard to define that render it difficult to fulfil the nutrients needs of the roots. These degradable/compostable substrates contaminate the water infrastructure. Furthermore, plugs of degradable/compostable substrates are often dimensionally unstable.

The present invention has for its object to provide a substrate that obviates or at least reduces one or more of the aforementioned problems.

This is achieved with the biodegradable foam substrate according to claim 1.

It is noted that in this application substrate and foam substrate are used interchangeably and refer to the same subject.

The foam substrate according to the present invention comprises a biodegradable polymer which is a polyester and/or an aromatic polymer. In the context of this invention biodegradable relates to the degradation resulting in a loss of properties from the action of microorganisms such as bacteria, fungi and algae. By manufacturing the biodegradable foam substrate according to the invention from a biodegradable polymer an environmentally friendly substrate for growing plants is achieved. This significantly reduces the environmental footprint of growing plants and plant substrates in glasshouses/greenhouses, for example involving hydroponic plant systems or other suitable systems. As a further effect of the use of the biodegradable products the substrate is preferably also compostable. In the context of this invention compostable relates to degradation by biological processes resulting in the yield of CO₂, water, inorganic compounds and biomass. Therefore, the biodegradable polymer in the foam substrate according to the invention is capable of being degraded such that the water infrastructure and/or water treatment plants are prevented from clogging. Furthermore, the biodegradable polymer in the foam substrate according to the invention is dimensional stable which prevents accumulation of the foam substrate causing blockages.

As a further advantage of the use of these biodegradable polymers the plants may even profit from the degradation of the substrate material. This results in the substrate having both a stabilizing/fixation effect and in addition thereto a growing effect due to the use of the degradation products for plant growth. This renders the substrate material according to the invention also cost effective and efficient. As a further effect, the disposal of the substrate material is much easier, thereby contributing to an effective and efficient substrate for plant growth.

An even further advantage of the foam substrate according to the present invention is that the substrate is dimensionally stable. In respect of the invention, this means that the substrate results in the substrate having a flexible shape that is compressible and expandable. The substrate will return to the original shape when bended, compressed and/or expanded. The effect of the dimensional stability is that the substrate is easily transportable and easily to apply in agricultural systems. During transport the substrate does not require severe protection. When applied in agricultural systems the substrate can be imprudently used as the shape of the foam will stay intact.

Providing the substrate as a foam substrate with an open cell structure enables plant roots to penetrate the substrate material relatively easily. This significantly stimulates root growth. Therefore, this contributes to the overall efficiency of growing plants. Such open cell structure preferably relates to a sponge-type structure with a number of interconnected openings or voids or pores or cells. Such open cell structure has an advantage that a homogeneous and well-defined distribution of water and/or air in the substrate is provided. Furthermore, the foam substrate according to the invention provides the open cell structure wherein the biodegradable foam substrate provides an open cell structure enabling water uptake which in turn promotes plant growth.

An even further advantage of the foam substrate according to the present invention is that the substrate is safe in use for manual handling. This implies that the substrate can be used in a safe manner. No further safety precautions, such as protective gloves, safety glasses, dust masks and the like are required when handling the substrate.

Yet a further advantage of the foam substrate according to the invention is that the substrate is hygienic and/or sterile. This results in the substrate having a reducing effect on the propagation of diseases and/or fungi. Plant diseases and/or fungi are detrimental for plants, especially when started at the roots of the plants.

Yet a further advantage of the foam substrate according to the invention is that the substrate is substantially inert with a nutrient solution provided to the growing plant. This results in the substrate having a reduced effect on the waste of valuable nutrients. The nutrients can be consumed by the roots of the plant instead of flowing away.

In a presently preferred embodiment the open cell structure comprises an open cell content of at least 50%. This means that at least 50% of the substrate volume is provided as an opening, pore, void and their connections in the form of channels. This open cell content can be measured in accordance with mercury porosimetry or gas physisorption. This measurement is used to measure specific surface areas and pore sizes with a pore size distribution. It will be understood that other suitable measurements can also be performed.

In one of the presently preferred embodiments of the invention the overall average cell size is in the range of 0.001 - 3.0 millimetres, preferably 0.01 - 2.0 millimetres, more preferably 0.01 - 1.5 millimetres, wherein the cells are interconnected voids. A foam substrate having an average cell size in the range or one of the ranges as mentioned enables most plant roots to penetrate easily and grow effectively within the biodegradable foam substrate according to the invention. Preferably, 75% of the voids have a cell size within the range or ranges as mentioned. This relates to the actual distribution of the cell sizes. The cell size is defined by the characteristic length or diameter of the void. The cell size is determined by counting the number of cell walls over a predefined length in two directions, in accordance to ASTM 3576-15.

In a presently preferred embodiment of the invention the biodegradable polymer is chosen from the group of polybutylene sebacate terephthalate and/or polybutylene adipate terephthalate and/or a mixture thereof.

It was shown that the use of polybutylene sebacate terephthalate and/or polybutylene adipate terephthalate provides an effective biodegradable foam substrate that is biodegradable and preferably compostable. In addition, it was shown that it also provides the improved possibility to fixate the plants in the substrate, while enabling plant roots to penetrate and grow into the foam substrate. These biodegradable polymers especially contribute to the flexibility and toughness of the resulting biodegradable foam substrate for growing plants.

In addition to, or as an alternative for, the aforementioned biodegradable polymers, the biodegradable polymer can also be of the group polyhydroxyalkanoate, poly(lactic acid), polybutylene succinate. These biodegradable polymers can be applied as an alternative to the aforementioned polymers or can be used in a mixture therewith. Such mixture provides a substrate that is flexible and tough, properties relating to a relatively high elastic modulus and strength. Especially the use of the combination of polybutylene adipate terephthalate and one or more of polyhydroxyalkanoate, poly(lactic acid), polybutylene succinate results in a mixture wherein the polybutylene adipate terephthalate substantially contributes to the flexibility and toughness of the foam substrate, and the other biodegradable polymers contribute to the strength and rigidness of the foam substrate.

In a presently preferred embodiment the amount of biodegradable polymer of the group polyhydroxyalkanoate, poly(lactic acid), polybutylene succinate in a mixture with polybutylene sebacate terephthalate and/or polybutylene adipate terephthalate is in the range of 10 - 90 wt%, preferably in the range of 10 - 60 wt% and most preferably in the range of 10 - 30 wt%. It was shown that such mixture provides a foam structure with an open cell structure having good properties for growing plants.

According to the invention, the polyester and/or aromatic polymer is branched and/or crosslinked. This branching and/or crosslinking contributes to providing an open cell structure.

In a further preferred embodiment of the invention the nucleating agent is chosen from the group of talc, cellulose, hydrotalcite, calcium hydroxide, sodium carbonate, sodium bicarbonate, potassium carbonate, potassium bicarbonate, aluminium carbonate, aluminium bicarbonate, calcium carbonate, calcium bicarbonate, calcium stearate, or a mixture thereof.

It was shown that the use of a nucleating agent as one or more components from the aforementioned group provides an efficient biodegradable foam substrate according to the invention.

The biodegradable foam substrate according to the invention is an integrally extruded foam. Such integrally extruded foam provides a foam substrate directly in its intended desired shape and dimensions.

Extruding the foam integrally comprises the extrusion of the foam within the extruder. Therefore, the extruder is provided with multiple zones, such zones are for example an intake zone, injection zone, and mixing zone. Expansion of the foam is achieved within and/or after a mould.

A further advantage of such integrally extruded foam is that the foam is dry and free of solvents when it is expanded. This reduces the costs of drying and/or removing any solvent.

Furthermore, the pores of such integrally extruded foam are controlled in an efficient manner. To grow a plant it is preferred to have equal pore sizes to enable efficient and effective root growth.

Therefore, an integrally extruded foam is more efficient and effective.

In a further preferred embodiment the open cell structure comprises an open cell content of the biodegradable foam substrate of at least 70% measured according to mercury porosimetry or gas physisorption, preferably the open cell content of the biodegradable foam substrate is at least 80% measured according to mercury porosimetry or gas physisorption, more preferably the open cell content of the biodegradable foam substrate is at least 90% measured according to mercury porosimetry or gas physisorption, most preferably the open cell content of the biodegradable foam substrate is at least 95% measured according to mercury porosimetry or gas physisorption.

By providing the biodegradable foam substrate with a relatively large open cell content roots can grow more easily. In addition, the plants and especially the plant roots can be provided with water, fertilizer, nutrients and other relevant components also more easily. This stimulates root and plant growth.

In one of the presently preferred embodiments of the invention the cells of the biodegradable foam substrate have pores with a total volume in the range of 5 - 100 cm³ g⁻¹, preferably in the rang of 5 - 50 cm³ g⁻¹, more preferably in the range of 5 - 25 cm³ g⁻¹. The substrate according to the invention is capable of containing and/or absorbing water with its relevant components in its cells, to which is also referred to as openings, voids, pores, wherein the cells are preferably interconnected with each other. Preferably, the pores have a total volume with at least 75% of the total pore volume being within this range.

In one of the presently preferred embodiments of the invention the cells and the total volume of the pores of the biodegradable foam substrate are, substantially the same. The substrate according to the invention is capable of containing and/or absorbing water with its relevant components in its cells, to which is also referred to as openings, voids, pores, wherein the cells are preferably interconnected with each other. By the introduction or absorption of the liquid the penetration and growth possibilities for plant roots is even further improved. It will be understood these cells of such sponge-like structure may expand or compress by the introduction or absorption of the liquid.

In one of the presently preferred embodiments of the invention, the biodegradable substrate preferably has a glass-transition temperature of at most 60 °C or less, preferably a glass-transition temperature of at most 30 °C or less, more preferably a glass-transition temperature of at most 0 °C or less, most preferably a glass-transition temperature of at most -20 °C or less. The foam substrate density is preferably in the range of 10 kg m⁻³ - 200 kg m⁻³, more preferably the foam density substrate is in the range of 20 kg m⁻³ - 90 kg m⁻³, even more preferably the foam substrate density is in the range of 30 kg m⁻³ - 70 kg m⁻³, and most preferably the foam substrate density is about 50 kg m⁻³ . The weight average molecular weight of the biodegradable polymer is preferably in the range of 10.000 g mol⁻¹ - 1.000.000 g mol⁻¹, preferably the weight average molecular weight of the biodegradable polymer is in the range of 10.000 g mol⁻¹ - 500.000 g mol⁻¹, more preferably the weight average molecular weight of the biodegradable polymer is in the range of 20.000 g mol⁻¹ - 250.000 g mol⁻¹, most preferably the weight average molecular weight of the biodegradable polymer is in the range of 30.000 g mol⁻¹ - 150.000 g mol⁻¹. The weight average molecular weight was determined by gel permeation chromatography (GPC) according to ISO 13885-1.

Experiments showed that providing the biodegradable foam substrate with the aforementioned properties provides an effective and efficient substrate for growing plants. Preferably, the substrate fulfils all of the aforementioned properties to have the most optimum conditions for growing plants. More preferably, the foam substrate density is in the range of 55 kg m⁻³ - 100 kg m⁻³.

In a further preferred embodiment of the invention the foam substrate further comprises an additive, wherein the additive is chosen from the group of perlite, vermiculite, nanoclay, salts, cellulose fibres, hemp fibres, cotton fibres, coconut fibres, polyethylene glycol, poloxamers, surfactants, plant nutrients, sugars, or a mixture thereof.

It will be understood that the additive or additives that are actually added can be chosen depending on the desired properties of the biodegradable foam substrate, which may depend on the specific plant or plant variety. For example, perlite and vermiculite are beneficial for water uptake and root growth. Nanoclay is beneficial for water uptake and fixation of the polymer matrix. Salts can be used to improve water uptake and plant feed. The cellulose fibres can be designed for different properties. For example, with regular cellulose fibres water uptake, compostability and the amount of bio-based content can be improved. Ultrafine cellulose fibres improve water uptake, fixation of the polymer matrix and improved bio-based content. Nanocrystalline fibres improve water uptake and fixation of the polymer matrix. Nanofibril fibres improve fixation of the polymer matrix and water uptake. Surface modified cellulose fibres such as CMC improve water uptake. Other components improve other properties. For example, hemp fibres improve handling, compostability and improve bio-based content. Cotton fibres improve water uptake, handling, compostability and improve bio-based content. Coconut fibres act as colorant and improve water uptake and compostability. Polyethylene glycol (PEG) and poloxanes and (polymeric) surfactants improve water uptake. Plant nutrients improve growing of seedlings, for example. Sugars improve water uptake and also growth of seedlings.

The invention also relates to a plant growing system comprising a holding unit for holding plants and biodegradable foam substrate according to an embodiment of the present invention, wherein the holding unit preferably is a container and more preferably is a container having at least one open end.

Such plant growing system provides similar effects and advantages as described for the biodegradable foam substrate.

The invention further also relates to a method for producing biodegradable foam substrate for growing plants, comprising the steps of:
- providing a mixture of biodegradable polymer, nucleating agent and a branching agent and/or crosslinking agent to form a reagent mixture;
- heating the mixture;
- providing a physical blowing agent to the mixture; and
- substantially completely extruding of the mixture to form the biodegradable foam substrate according to an embodiment of the invention.

The method provides similar effects and advantages as described in relation to the biodegradable foam substrate and/or plant growing system. Preferably, an additive is added prior to the heating step. In a manufacturing process the physical blowing agent is preferably carbon dioxide, nitrogen, argon, MTBE, air, (iso)pentane, propane, butane and the like or a mixture thereof. It is shown that this provides an effective foam structure with the desired open structure. Optionally, a branching and/or crosslinking agent is added. The branching and/or crosslinking agent comprises, for example, a compound with multiple epoxide functionalities, preferably in the form of an oligomer or polymer where the epoxide functionalities are pendant to the main chain. It will be understood the branching and/or crosslinking agent could be any moiety with two or more unsaturations, capable of reacting with the polymer chain in the presence of free radicals. For examples branching agent/crosslinking agents, but not limited to, are butadiene, butadiene derived polymers, divynylbenzene, benzoquinone, furfuryl sulphite, or a mixture thereof. For example compounds which can form free radicals, but not limited to, are dicumyl peroxide, di*-tert-*butyl peroxide, *tert-*butyl peroxibenzoate, *tert*-peroxyacetate, or a mixture thereof. It will be understood that other suitable components can be added as a branching and/or crosslinking agent. It will be understood that branching and/or crosslinking can be initiated by other methods than chemical initiation, such as initiation by light, radiation and/or heat.

In a presently preferred method of the invention the extrusion comprises a single extrusion step to form an integrally extruded foam substrate.

Further advantages, features and details of the invention are elucidated on the basis of preferred embodiments thereof, wherein reference is made to the accompanying drawings, in which:
- Figure 1 shows a plant growing system with the biodegradable foam substrate of the invention;
- Figure 2 shows an additive supply system;
- Figure 3 shows a detail of the substrate of figure 1 illustrating the sponge-like structure;
- Figure 4 schematically shows the process of manufacturing the substrate and growing plants thereon;
- Figure 5 shows a GPC spectrum of the biodegradable polymer;
- Figure 6 shows a microscopic photo of foam comprising an open cell structure;
- Figure 7 shows intrusion-extrusion curves of the biodegradable foam substrate according to the invention; and
- Figure 8 shows differential pore size distributions of the samples derived from the intrusion curves in Figure 7 and mentioned in Table 1.

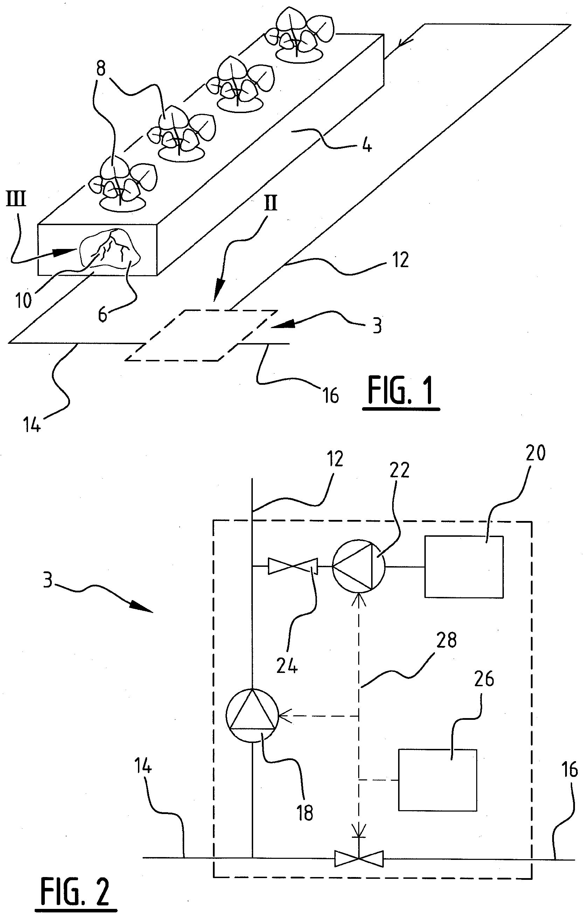

Plant growing system 2 (Figure 1) comprises a tray or gutter 4 for holding biodegradable foam substrate 6. Plants 8 are positioned and fixated in substrate 6 having roots 10 penetrating and growing in substrate 6. Supply 12 provides water and fertilizer (and other relevant components) to substrate 6 and output 14 collects the remaining flow. From output 14 the flow is sent to drain 16 and/or recycled with pump 18 to supply 12.

In a preferred embodiment the germ root is not able to penetrate the foam substrate.

From additives supply system 20 one or more additives can be supplied with pump 22 and dosing controller 24 to supply 12. Controller 26 controls the flow rate by controlling pump 18, dosing of additives by controlling pump 22 and the amount of recycling by controlling drain 16.

It will be understood that alternative systems can also be envisaged in accordance with the present invention.

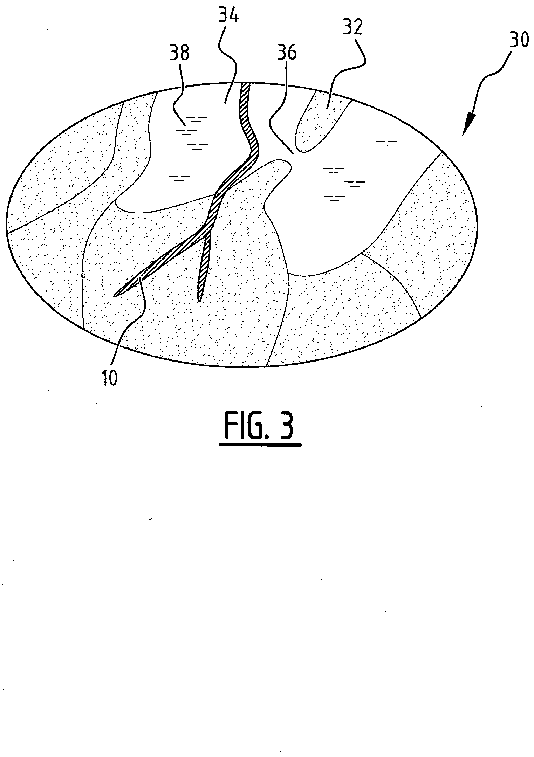

Sponge-like structure 30 (Figure 3) is made from material 32 that defines pores or voids 34 that are interconnected with channels 36. In use, pores or voids 34 are filled with water 38 and the suitable components enabling roots 10 to grow.

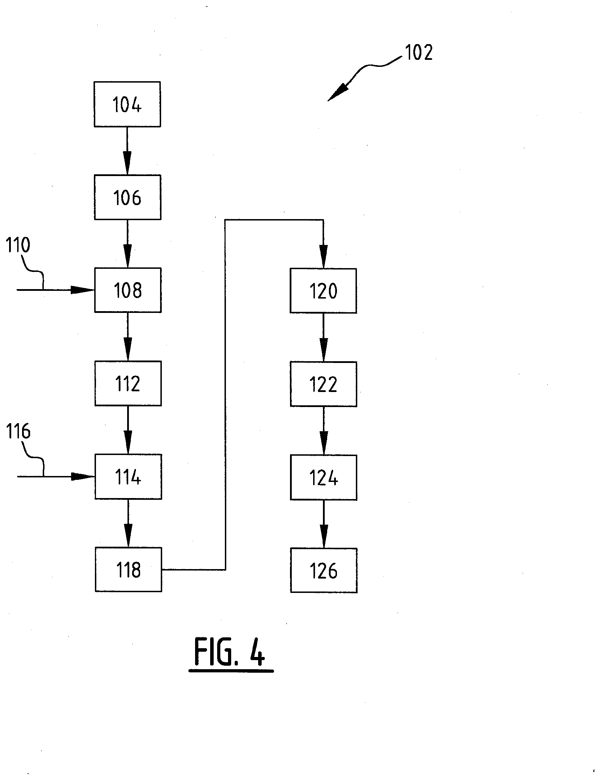

Manufacturing and growing process 102 (Figure 4) starts with selecting the desired properties for substrate 6 in selection step 104. Mixing step 106 provides the desired mixture of biodegradable polymers and one or more nucleating agents.

This mixture of biodegradable polymers and nucleating agent(s) is provided to the extruder in supply step 108. Optionally, additives can also be added in adding step 110. In or near the extruder the mixture is heated in heating step 112 to or towards the desired temperature. In the extruder the heated mixture is transported in extrusion step 114, and preferably confronted with a physical blowing agent, such as carbon dioxide in blowing step 116. Then the actual forming of a foam structure in foaming step 118 takes place resulting in the raw end product. If necessary, the raw product is dimensioned in dimensioning step 120. For example, this may involve cutting the raw substrate material into the desired size and shape. Next, the substrate 6 is transported and stored in transport step 122.

As soon as foam substrate 6 is needed it is installed in installation step 124. After installation plants can grow on and into the substrate in growing step 126. This may also involve degradation of the substrate material at the optional use of its components for the plant growth.

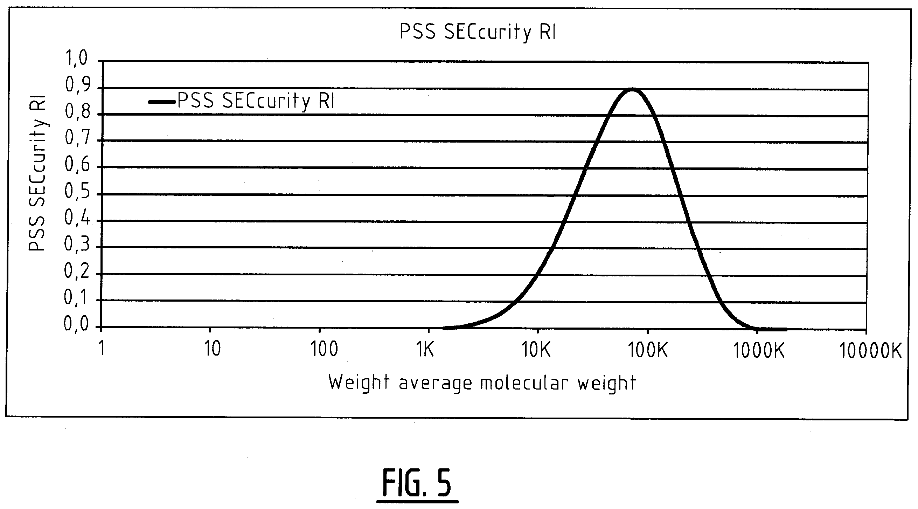

Analysis of the biodegradable polymer by GPC (Figure 5) shows that a weight average molecular weight of the biodegradable polymer in the range of 10.000 g mol⁻¹ - 1.000.000 g mol⁻¹ was achieved. The measurement was performed as shown in Figure 5. The weight average molecular weight was determined according to ISO 13885-1. The weight average molecular weight in g mol⁻¹ (shown on the x-axis) was plotted against the PSS SECcurity RI (shown on the y-axis).

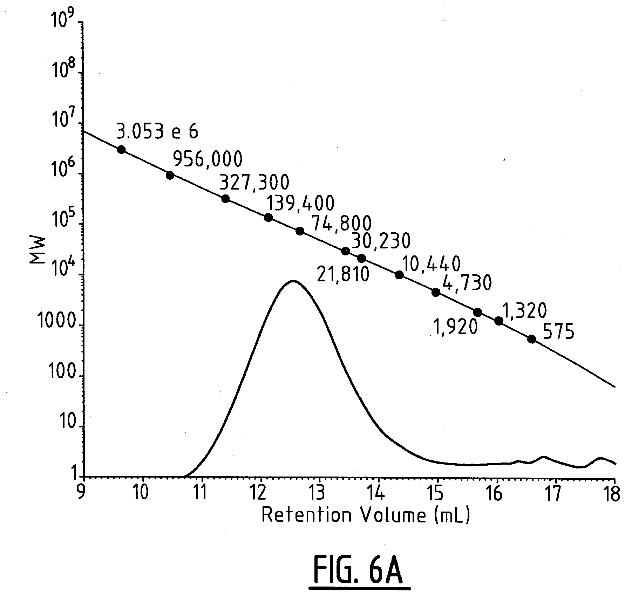

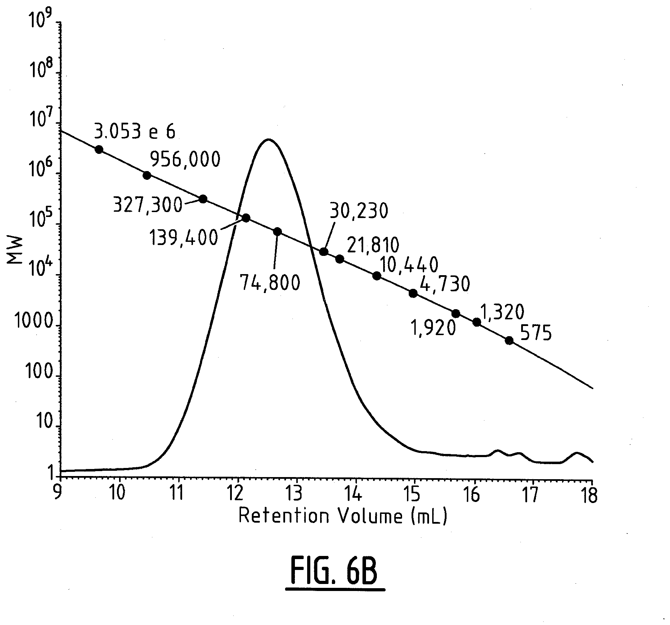

Figure 6 shows a microscopic photo of foam comprising an open cell structure. The foam is provided using the method according to the invention. The average size of the pores is 0.70 mm. The majority of the cells comprise a size which is at least 0.5 times the average size of the pores and at most 2 times the average size of the pores. The sizes of the pores are determined by the open source software from Fiji including the ImageJ plugin.

Experiments have shown that a combination of biodegradable polymers can be used advantageously to provide the desired characteristics for a specific plant or plant variety. In some of these experiments polybutylene sebacate terephthalate or polybutylene adipate terephthalate is effectively used in combination with polyhydroxyalkanoate or polybutylene succinate in a ratio of about 80 - 20. An amount of about 1 - 3%, preferably 2%, talc and cellulose is used as nucleating agent and filler. This provides sponge-like structure 30 with an open cell content of about 75 to 85%. After the manufacturing process the average size of the pores or voids is about 500 micron. The foam density is about 50 kg m⁻³. Optionally, some additives are provided, such as ultrafine cellulose fibres. In the manufacturing process about 2.5 wt% CO₂ is used for foaming the mixture. Branching and/or crosslinking agent is provided in the range of between 0 - 4 wt%, preferably 1 wt%. Optionally, CaCO₃ is used in a range of 2.5 - 3% as an additional filler in the substrate matrix.

Experiments showed that the substrate in use can have a water uptake of about 20 times the dry weight of the substrate. In use, the substrate showed good fixation possibility and plant root growth potential. After use the material degraded and was optionally composted after which its components were used in the process, thereby contributing to the sustainable character of the biodegradable foam substrate according to the invention.

Experiments showed that the porosity of the foam is at least 76% comprising a total volume of 2.49 cm³ g⁻¹. The porosity was determined by mercury intrusion porosimetry over three samples. For the measurement cubes of about 10 x 8 x 8 mm were used. The samples were degassed in vacuum at about 25 °C for about 16 hours. Subsequently, the intrusion and extrusion curves were recorde on a Micrometrics Autopore 9505 analyser, applying pressures from 0.002 MPa to 220 MPa. The mass loss obtained upon pre-treatment has been recorded and the dry mass has been used in the calculations.

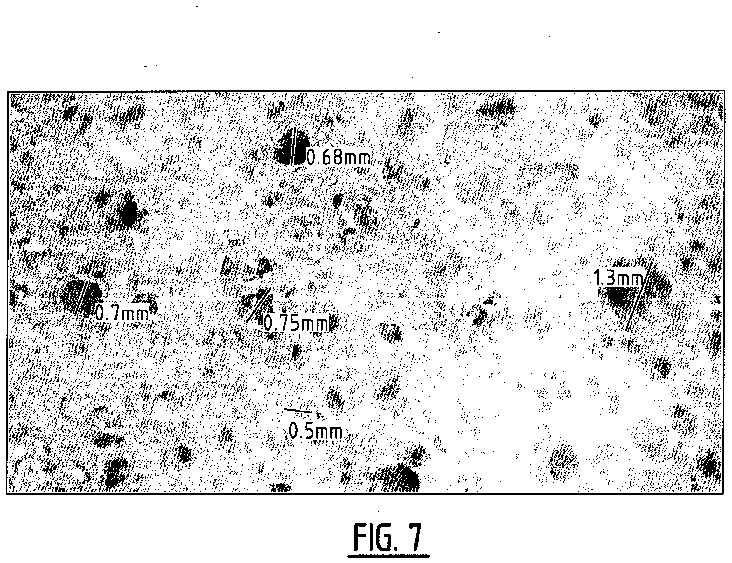

The intrusion-extrusion curves of the sample are shown in Figure 7. The first intrusion step occurs over a relatively broad pressure range from a pressure of about 0.002 MPa up to approximately 1 MPa where a plateau is reached. A second intrusion step can be seen at a pressure which ranges from about 60 MPa to 220 MPa, this attributes to the elastic compression of the large cubes rather than actual pores. It will be understood that this is the case due to the fact that the extrusion curves are reversible to the intrusion curves, which is not the case when porosity is present.

The properties of the sample are incorporated in Table 1.

**Table 1 Properties samples analysed by mercury porosimetry at a pressure of 60 MPa.**

| Entry | Mass g | Mass loss m/m % | Vₜₒₜₐₗ cm³ g⁻¹ | Prosity % | ρₐₚₚₐᵣₑₙₜ g cm⁻³ |
|---|---|---|---|---|---|
| 1 | 0.1487 | 1.7 | 4.12 | 83 | 1.19 |
| 2 | 0.1844 | 0.9 | 2.49 | 76 | 1.28 |
| 3 | 0.1375 | 0.8 | 3.98 | 84 | 1.31 |

The skeletal density of entry 1 of Table 1 has been determined using helium pycnometry and was about 1.26 g cm⁻³. It will be understood that the differences could be induced by a high degree of porosity and low sample mass used could result in somewhat inaccurate sample volume, and thus porosity, determinations.

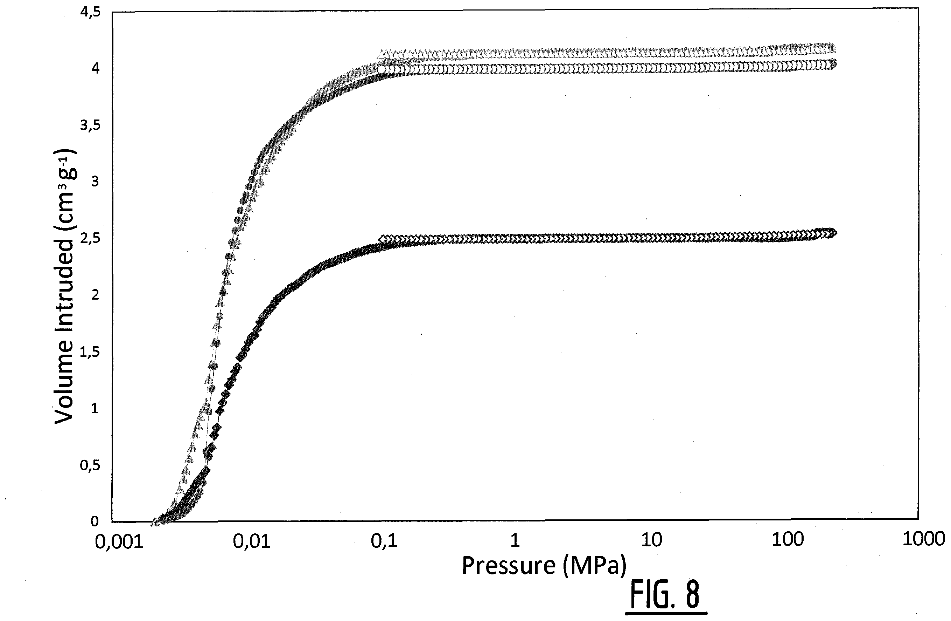

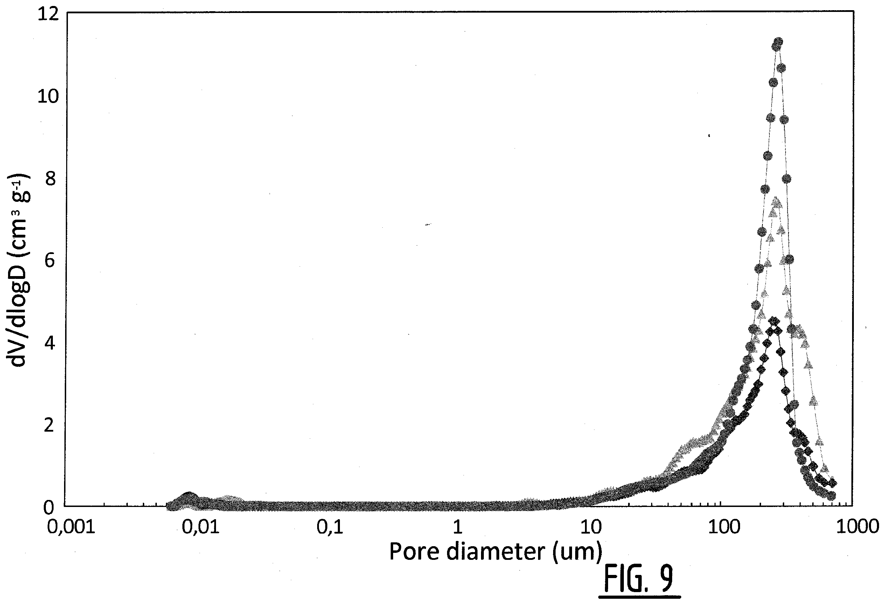

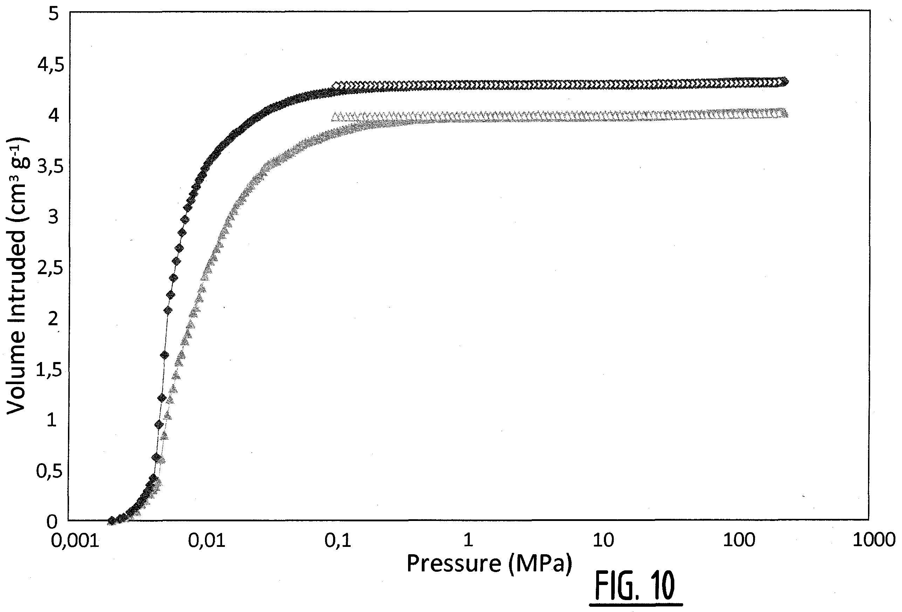

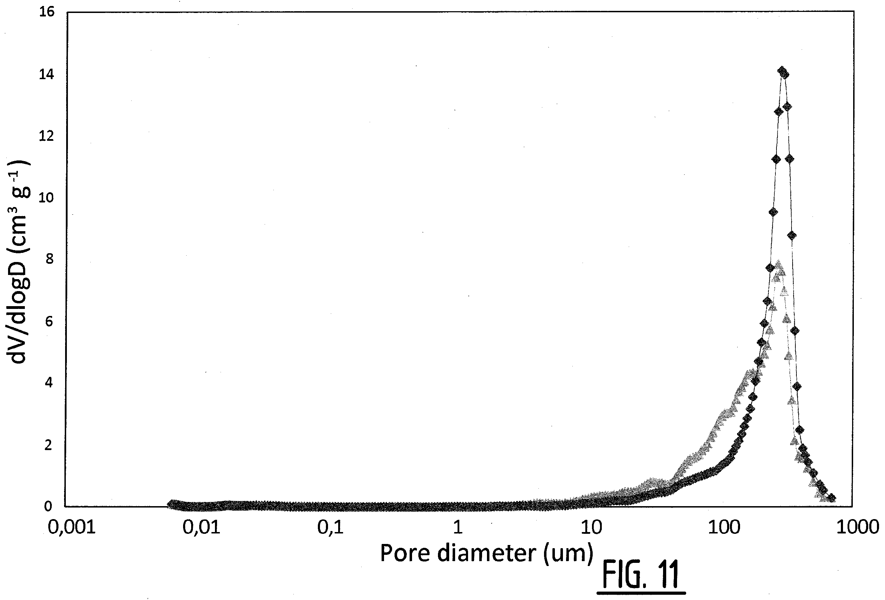

The pore size distributions derived from the intrusion curves are displayed in Figure 8. Difference could be observed in the intrusion curves at lower pressure (larger pores) between the samples. The distributions of samples also show these differences. For example, the sample of entry 3 comprises a distribution with a very high contribution of similar sized pores, ranging from about 10 to 700 µm with a mode around 265 µm. The distributions of the samples of entry 1 and 2 are slightly broader and lower, while the range of and modes are similar to the sample of entry 3, ranging from about 10 to 700 µm with a mode around 265 µm. The minor contribution noticed at very small pores size can be attributed to the elastic compression of the samples.

Therefore, it can thus be concluded that the three samples mainly comprise large intra-particles pores.

Experiments showed that the biodegradable foam substrate according to the invention comprises a foam substrate density a mentioned in Table 2.

**Table 2 maximum and minimum value biodegradable foam substrate density.**

| Entry | 1 | 2 | 3 | 4 | 5 | 6 | 7 | 8 | 9 |
|---|---|---|---|---|---|---|---|---|---|
| Max density | 96.548 | 91.222 | 96.548 | 89.239 | 89.239 | 85.948 | 97.810 | 96.548 | 96.548 |
| Min density | 66.606 | 58.781 | 67.242 | 76.753 | 76.753 | 76.753 | 71.409 | 60.286 | 66.606 |

In a further experiment PBAT, pigment, branching agent and cellulose are added to the first zone of the extruder and mixed. The mixture is heated to about 200 °C in order to melt the PBAT, to homogenise the mixture and to react the branching agent and PBAT. In the following zone an about 70 °C pre-heated surfactant is added to the mixture. In further zones the reaction mixture is slowly cooled down and CO₂ is injected. In the final zone of the extruder the mixture is mixed using a static mixer and is provided to the mould.

The present invention is by no means limited to the above described preferred embodiments thereof. The rights sought are defined by the following claims, within the scope of which many modifications can be envisaged.

## Claims

1. Biodegradable foam substrate for growing plants, comprising a biodegradable polymer and a nucleating agent, wherein the biodegradable polymer is a polyester and/or an aromatic polymer, **characterised in that**
the polyester and/or aromatic polymer is branched and/or crosslinked, such that the biodegradable foam substrate includes an open cell structure enabling plant growth, **in that**
the biodegradable foam substrate is an integrally extruded foam,
**in that** the open cell structure comprises an open cell content of at least 50% measured according to mercury porosimetry or gas physisorption, and
**in that** the cells are interconnected voids.

2. Biodegradable foam substrate for growing plants according to claim 1, further comprising an overall average cell size in the range of 0.001 - 3.0 millimetres, preferably in the range of 0.01 - 2.0 millimetres, more preferably in the range of 0.01 - 1.5 millimetres.

3. Biodegradable foam substrate for growing plants according to any one of the preceding claims, wherein the biodegradable polymer is chosen from the group of polybutylene sebacate terephthalate and/or polybutylene adipate terephthalate.

4. Biodegradable foam substrate for growing plants according to any one of the preceding claims, wherein the biodegradable polymer is one or more of the group polyhydroxyalkanoate, poly(lactic acid), polybutylene succinate.

5. Biodegradable foam substrate for growing plants according to any one of the preceding claims, wherein the nucleating agent is chosen from the group of talc, cellulose, hydrotalcite, calcium hydroxide, sodium carbonate, sodium bicarbonate, potassium carbonate, potassium bicarbonate, aluminium carbonate, aluminium bicarbonate, calcium carbonate, calcium bicarbonate, calcium stearate, or a mixture thereof.

6. Biodegradable foam substrate for growing plants according to any one of the preceding claims, wherein the biodegradable foam substrate is free of solvent.

7. Biodegradable foam substrate for growing plants according to any one of the preceding claims, wherein the open cell structure, comprises an open cell content wherein the open cell content of the biodegradable foam substrate is at least 70% measured according to mercury porosimetry or gas physisorption, preferably the open cell content of the biodegradable foam substrate is at least 80% measured according to mercury porosimetry or gas physisorption, more preferably the open cell content of the biodegradable foam substrate is at least 90% measured according to mercury porosimetry or gas physisorption, most preferably the open cell content of the biodegradable foam substrate is at least 95% measured according to mercury porosimetry or gas physisorption.

8. Biodegradable foam substrate for growing plants according to any one of the preceding claims, wherein the total pore volume of the biodegradable foam substrate is in the range of 5 - 100 cm³ g⁻¹, preferably in the range of 5 - 50 cm³ g⁻¹, more preferably in the range of 5 - 25 cm³ g⁻¹ , preferably wherein the biodegradable foam substrate has a glass-transition temperature of at most 60 °C or less, preferably a glass-transition temperature of at most 30 °C or less, more preferably a glass-transition temperature of at most 0 °C or less, most preferably a glass-transition temperature of at most -20 °C or less, preferably wherein the foam substrate density is in the range of 10 kg m⁻³ - 200 kg m⁻³, more preferably the foam substrate density is in the range of 20 kg m⁻³ - 90 kg m⁻³, even more preferably the foam substrate density is in the range of 30 kg m⁻³ - 70 kg m⁻³, and most preferably the foam substrate density is about 50 kg m⁻³, preferably wherein the weight average molecular weight of the biodegradable polymer is in the range of 10.000 g mol⁻¹ - 1.000.000 g mol⁻¹, preferably the weight average molecular weight of the biodegradable polymer is in the range of 10.000 g mol⁻¹ - 500.000 g mol⁻¹, more preferably the weight average molecular weight of the biodegradable polymer is in the range of 20.000 g mol⁻¹ - 250.000 g mol⁻¹, most preferably the weight average molecular weight of the biodegradable polymer is in the range of 30.000 g mol⁻¹ - 150.000 g mol⁻¹.

9. Biodegradable foam substrate for growing plants according to any one of the preceding claims, further comprising an additive, wherein the additive is chosen from the group of perlite, vermiculite, nanoclay, salts, cellulose fibres, hemp fibres, cotton fibres, coconut fibres, polyethylene glycol, poloxamers, surfactants, plant nutrients, sugars, or a mixture thereof, preferably wherein cellulose fibres are chosen from the group of regular cellulose fibres, ultrafine cellulose fibres, nanocrystalline cellulose fibres, nanofibril cellulose fibres, surface modified cellulose fibres, or a mixture thereof.

10. Plant growing system (2) comprising a holding unit (4) for holding plants (8) and biodegradable foam substrate (6) according to any one of the claims 1 - 9, wherein the holding unit (4) preferably is a container and more preferably is a container having at least one open end.

11. Method (102) for producing biodegradable foam substrate for growing plants, comprising the steps of:
- providing (108) a mixture of biodegradable polymer wherein the biodegradable polymer is a polyester and/or an aromatic polymer, nucleating agent and a branching agent and/or crosslinking agent to form a reagent mixture;
- heating the mixture (112);
- providing (116) a physical blowing agent to the mixture; and
- substantially completely extruding (114) of the mixture to form the biodegradable foam substrate according to any one of the claims 1 to 9.

12. Method according to claim 11, further comprising the step of adding (110) an additive prior to the heating step.

13. Method according to any one of the claims 11 or 12, wherein the physical blowing agent is carbon dioxide, nitrogen, argon, MTBE, air, (iso)pentane, propane, butane, and the like or a mixture thereof, preferably wherein providing the branching agent and/or crosslinking agent comprises providing dicumyl peroxide, di-*tert*-butyl peroxide, *tert*-butyl peroxibenzoate, *tert-*peroxyacetate, butadiene, butadiene derived polymers, divynylbenzene, benzoquinone, furfuryl sulphide, and the like or a mixture thereof..

14. Method according to any one of the claims 11 - 13, wherein the step of extruding comprises a single extrusion step to form the integrally extruded foam substrate.

## Patentansprüche

1. Biologisch abbaubares Schaumsubstrat zum Züchten von Pflanzen, umfassend ein biologisch abbaubares Polymer und ein Nukleierungsmittel, wobei das biologisch abbaubare Polymer ein Polyester und/oder ein aromatisches Polymer ist, **dadurch gekennzeichnet, dass** der Polyester und/oder das aromatische Polymer verzweigt und/oder vernetzt ist, derart, dass das biologisch abbaubare Schaumsubstrat eine offenzellige Struktur einschließt, die Pflanzenzucht ermöglicht, **dadurch, dass** das biologisch abbaubare Schaumsubstrat ein integral extrudierter Schaum ist, **dadurch, dass** die offenzellige Struktur einen Gehalt an offenen Zellen von mindestens 50 % umfasst, gemessen gemäß Quecksilberporosimetrie oder Gasphysisorption, und **dadurch, dass** die Zellen miteinander verbundene Hohlräume sind.

2. Biologisch abbaubares Schaumsubstrat zum Züchten von Pflanzen nach Anspruch 1, ferner umfassend eine durchschnittliche Gesamtzellgröße im Bereich von 0,001 - 3,0 Millimetern, vorzugsweise im Bereich von 0,01 - 2,0 Millimetern, mehr bevorzugt im Bereich von 0,01 - 1,5 Millimetern.

3. Biologisch abbaubares Schaumsubstrat zum Züchten von Pflanzen nach einem der vorstehenden Ansprüche, wobei das biologisch abbaubare Polymer aus der Gruppe von Polybutylensebacatterephthalat und/oder Polybutylenadipatterephthalat ausgewählt ist.

4. Biologisch abbaubares Schaumsubstrat zum Züchten von Pflanzen nach einem der vorstehenden Ansprüche, wobei das biologisch abbaubare Polymer eines oder mehrere aus der Gruppe Polyhydroxyalkanoat, Poly(milchsäure), Polybutylensuccinat ist.

5. Biologisch abbaubares Schaumsubstrat zum Züchten von Pflanzen nach einem der vorstehenden Ansprüche, wobei das Nukleierungsmittel aus der Gruppe von Talkum, Cellulose, Hydrotalcit, Calciumhydroxid, Natriumcarbonat, Natriumbicarbonat, Kaliumcarbonat, Kaliumbicarbonat, Aluminiumcarbonat, Aluminiumbicarbonat, Calciumcarbonat, Calciumbicarbonat, Calciumstearat oder einer Mischung davon ausgewählt ist.

6. Biologisch abbaubares Schaumsubstrat zum Züchten von Pflanzen nach einem der vorstehenden Ansprüche, wobei das biologisch abbaubare Schaumsubstrat frei von Lösungsmittel ist.

7. Biologisch abbaubares Schaumsubstrat zum Züchten von Pflanzen nach einem der vorstehenden Ansprüche, wobei die offenzellige Struktur einen Gehalt an offenen Zellen umfasst, wobei der Gehalt an offenen Zellen des biologisch abbaubaren Schaumsubstrats mindestens 70 % beträgt, gemessen gemäß Quecksilberporosimetrie oder Gasphysisorption, vorzugsweise der Gehalt an offenen Zellen des biologisch abbaubaren Schaumsubstrats mindestens 80 % beträgt, gemessen gemäß Quecksilberporosimetrie oder Gasphysisorption, mehr bevorzugt der Gehalt an offenen Zellen des biologisch abbaubaren Schaumsubstrats mindestens 90 % beträgt, gemessen gemäß Quecksilberporosimetrie oder Gasphysisorption, am meisten bevorzugt der Gehalt an offenen Zellen des biologisch abbaubaren Schaumsubstrats mindestens 95 % beträgt, gemessen gemäß Quecksilberporosimetrie oder Gasphysisorption.

8. Biologisch abbaubares Schaumsubstrat zum Züchten von Pflanzen nach einem der vorstehenden Ansprüche, wobei das insgesamte Porenvolumen des biologisch abbaubaren Schaumsubstrats im Bereich von 5 - 100 cm³ g⁻¹ liegt, vorzugsweise im Bereich von 5 - 50 cm³ g⁻¹, mehr bevorzugt im Bereich von 5 - 25 cm³ g⁻¹ , vorzugsweise wobei das biologisch abbaubare Schaumsubstrat eine Glasübergangstemperatur von höchstens 60 °C oder weniger aufweist, vorzugsweise eine Glasübergangstemperatur von höchstens 30 °C oder weniger, mehr bevorzugt eine Glasübergangstemperatur von höchstens 0 °C oder weniger, am meisten bevorzugt eine Glasübergangstemperatur von höchstens -20 °C oder weniger, vorzugsweise wobei die Schaumsubstratdichte im Bereich von 10 kg m⁻³ - 200 kg m⁻³ liegt, mehr bevorzugt die Schaumsubstratdichte im Bereich von 20 kg m⁻³ - 90 kg m⁻³ liegt, noch mehr bevorzugt die Schaumsubstratdichte im Bereich von 30 kg m⁻³ - 70 kg m⁻³ liegt, und am meisten bevorzugt die Schaumsubstratdichte etwa 50 kg m⁻³ beträgt, vorzugsweise wobei das Gewichtsmittel des Molekulargewichts des biologisch abbaubaren Polymers im Bereich von 10.000 g mol⁻¹ - 1.000.000 g mol⁻¹ liegt, vorzugsweise das Gewichtsmittel des Molekulargewichts des biologisch abbaubaren Polymers im Bereich von 10.000 g mol⁻¹ - 500.000 g mol⁻¹ liegt, mehr bevorzugt das Gewichtsmittel des Molekulargewichts des biologisch abbaubaren Polymers im Bereich von 20.000 g mol⁻¹ - 250.000 g mol⁻¹ liegt, am meisten bevorzugt das Gewichtsmittel des Molekulargewichts des biologisch abbaubaren Polymers im Bereich von 30.000 g mol⁻¹ - 150.000 g mol⁻¹ liegt.

9. Biologisch abbaubares Schaumsubstrat zum Züchten von Pflanzen nach einem der vorstehenden Ansprüche, ferner umfassend einen Zusatzstoff, wobei der Zusatzstoff aus der Gruppe von Perlit, Vermiculit, Nanoton, Salzen, Cellulosefasern, Hanffasern, Baumwollfasern, Kokosfasern, Polyethylenglycol, Poloxameren, Tensiden, Pflanzennährstoffen, Zuckern oder einer Mischung davon ausgewählt ist, vorzugsweise wobei Cellulosefasern aus der Gruppe von regulären Cellulosefasern, ultrafeinen Cellulosefasern, nanokristallinen Cellulosefasern, Nanofibril-Cellulosefasern, oberflächenmodifizierten Cellulosefasern oder einer Mischung davon ausgewählt sind.

10. Pflanzenzuchtsystem (2), umfassend eine Halteeinheit (4) zum Halten von Pflanzen (8) und biologisch abbaubares Schaumsubstrat (6) nach einem der Ansprüche 1 bis 9, wobei die Halteeinheit (4) vorzugsweise ein Behälter ist und mehr bevorzugt ein Behälter ist, der mindestens ein offenes Ende aufweist.

11. Verfahren (102) zum Herstellen von biologisch abbaubarem Schaumsubstrat zum Züchten von Pflanzen, umfassend die Schritte:
- Bereitstellen (108) einer Mischung aus biologisch abbaubarem Polymer, wobei das biologisch abbaubare Polymer ein Polyester und/oder ein aromatisches Polymer ist, Nukleierungsmittel und einem Verzweigungsmittel und/oder Vernetzungsmittel, um eine Reagenzmischung auszubilden;
- Erhitzen der Mischung (112);
- Bereitstellen (116) eines physikalischen Treibmittels an die Mischung; und
- im Wesentlichen vollständiges Extrudieren (114) der Mischung, um das biologisch abbaubare Schaumsubstrat nach einem der Ansprüche 1 bis 9 auszubilden.

12. Verfahren nach Anspruch 11, ferner umfassend den Schritt eines Zugebens (110) eines Zusatzstoffes vor dem Erhitzungsschritt.

13. Verfahren nach einem der Ansprüche 11 oder 12, wobei das physikalische Treibmittel Kohlendioxid, Stickstoff, Argon, MTBE, Luft, (Iso)pentan, Propan, Butan und dergleichen oder eine Mischung davon ist, vorzugsweise wobei das Bereitstellen des Verzweigungsmittels und/oder Vernetzungsmittels das Bereitstellen von Dicumylperoxid, Di-tert-butylperoxid, tert-Butylperoxybenzoat, tert-Peroxyacetat, Butadien, von Butadien abgeleiteten Polymeren, Divinylbenzol, Benzochinon, Furfurylsulfid und dergleichen oder einer Mischung davon umfasst.

14. Verfahren nach einem der Ansprüche 11 bis 13, wobei der Schritt des Extrudierens einen einzigen Extrusionsschritt umfasst, um das integral extrudierte Schaumsubstrat auszubilden.

## Revendications

1. Substrat en mousse biodégradable destiné à la culture de plantes, comprenant un polymère biodégradable et un agent de nucléation, dans lequel le polymère biodégradable est un polyester et/ou polymère aromatique,
**caractérisé en ce que** le polyester et/ou le polymère aromatique est ramifié et/ou réticulé, de telle sorte que le substrat en mousse biodégradable comporte une structure à alvéoles ouvertes permettant la culture de plantes, **en ce que** le substrat en mousse biodégradable est une mousse extrudée d'un seul bloc, **en ce que** la structure à alvéoles ouvertes comprend une teneur en alvéoles ouvertes d'au moins 50 % mesurée selon une porosimétrie au mercure ou une physisorption de gaz, et **en ce que** les alvéoles sont des espaces vides interconnectés.

2. Substrat en mousse biodégradable destiné à la culture de plantes selon la revendication 1, comprenant en outre une taille moyenne globale d'alvéole dans la plage de 0,001 à 3,0 millimètres, de préférence dans la plage de 0,01 à 2,0 millimètres, plus préférablement dans la plage de 0,01 à 1,5 millimètre.

3. Substrat en mousse biodégradable destiné à la culture de plantes selon l'une quelconque des revendications précédentes, dans lequel le polymère biodégradable est choisi dans le groupe de polybutylène sébacate téréphtalate et/ou polybutylène adipate téréphtalate.

4. Substrat en mousse biodégradable destiné à la culture de plantes selon l'une quelconque des revendications précédentes, dans lequel le polymère biodégradable est un ou plusieurs du groupe polyhydroxyalcanoate, poly(acide lactique), succinate de polybutylène.

5. Substrat en mousse biodégradable destiné à la culture de plantes selon l'une quelconque des revendications précédentes, dans lequel l'agent de nucléation est choisi parmi le groupe de talc, cellulose, hydrotalcite, hydroxyde de calcium, carbonate de sodium, bicarbonate de sodium, carbonate de potassium, bicarbonate de potassium, carbonate d'aluminium, bicarbonate d'aluminium, carbonate de calcium, bicarbonate de calcium, stéarate de calcium, ou un mélange de ceux-ci.

6. Substrat en mousse biodégradable destiné à la culture de plantes selon l'une quelconque des revendications précédentes, dans lequel le substrat en mousse biodégradable est exempt de solvant.

7. Substrat en mousse biodégradable destiné à la culture de plantes selon l'une quelconque des revendications précédentes, dans lequel la structure à alvéoles ouvertes, comprend une teneur en alvéoles ouvertes dans lequel la teneur en alvéoles ouvertes du substrat en mousse biodégradable est d'au moins 70 % mesurée selon une porosimétrie au mercure ou une physisorption de gaz, de préférence la teneur en alvéoles ouvertes du substrat en mousse biodégradable est d'au moins 80 % mesurée selon une porosimétrie au mercure ou une physisorption de gaz, plus préférablement la teneur en alvéoles ouvertes du substrat en mousse biodégradable est d'au moins 90 % mesurée selon une porosimétrie au mercure ou une physisorption de gaz, le plus préférablement la teneur en alvéoles ouvertes du substrat en mousse biodégradable est d'au moins 95 % mesurée selon une porosimétrie au mercure ou une physisorption de gaz.

8. Substrat en mousse biodégradable destiné à la culture de plantes selon l'une quelconque des revendications précédentes, dans lequel le volume total de pores du substrat en mousse biodégradable est dans la plage de 5 à 100 cm³ g⁻¹, de préférence dans la plage de 5 à 50 cm³ g⁻¹, plus préférablement dans la plage de 5 à 25 cm³ g⁻¹, de préférence dans lequel le substrat en mousse biodégradable a une température de transition vitreuse d'au plus 60 °C ou moins, de préférence une température de transition vitreuse d'au plus 30 °C ou moins, plus préférablement une température de transition vitreuse d'au plus 0 °C ou moins, le plus préférablement une température de transition vitreuse d'au plus -20 °C ou moins, de préférence dans lequel la masse volumique de substrat de mousse est dans la plage de 10 kg m⁻³ à 200 kg m⁻³, plus préférablement la masse volumique de substrat de mousse est dans la plage de 20 kg m⁻³ à 90 kg m⁻³, même plus préférablement la masse volumique de substrat de mousse est dans la plage de 30 kg m⁻³ à 70 kg m⁻³, et le plus préférablement la masse volumique de substrat de mousse est d'environ 50 kg m⁻³, de préférence dans lequel la masse moléculaire moyenne en poids du polymère biodégradable est dans la plage de 10 000 g mol⁻¹ à 1 000 000 g mol⁻¹, de préférence la masse moléculaire moyenne en poids du polymère biodégradable est dans la plage de 10 000 g mol⁻¹ à 500 000 g mol⁻¹, plus préférablement la masse moléculaire moyenne en poids du polymère biodégradable est dans la plage de 20 000 g mol⁻¹ à 250 000 g mol⁻¹, le plus préférablement la masse moléculaire moyenne en poids du polymère biodégradable est dans la plage de 30 000 g mol⁻¹ à 150 000 g mol⁻¹.

9. Substrat en mousse biodégradable destiné à la culture de plantes selon l'une quelconque des revendications précédentes, comprenant en outre un additif, dans lequel l'additif est choisi dans le groupe de perlite, vermiculite, nanoargile, sels, fibres de cellulose, fibres de chanvre, fibres de coton, fibres de coco, polyéthylène glycol, poloxamères, agents tensioactifs, nutriments végétaux, sucres, ou un mélange de ceux-ci, de préférence dans lequel les fibres de cellulose sont choisies dans le groupe de fibres de cellulose ordinaires, fibres de cellulose ultrafines, fibres de cellulose nanocristalline, fibres de cellulose nanofibrillées, fibres de cellulose modifiées en surface, ou un mélange de celles-ci.

10. Système de culture de plantes (2) comprenant une unité de maintien (4) permettant de maintenir des plantes (8) et un substrat en mousse biodégradable (6) selon l'une quelconque des revendications 1 à 9, dans lequel l'unité de maintien (4) est de préférence un contenant et plus préférablement est un contenant ayant au moins une extrémité ouverte.

11. Procédé (102) permettant de produire un substrat en mousse biodégradable destiné à la culture de plantes, comprenant les étapes consistant à :
- fournir (108) un mélange de polymère biodégradable dans lequel le polymère biodégradable est un polyester et/ou un polymère aromatique, un agent de nucléation et un agent de ramification et/ou un agent de réticulation pour former un mélange de réactifs ;
- chauffer le mélange (112) ;
- fournir (116) un agent d'expansion physique au mélange ; et
- extruder (114) de manière sensiblement complète le mélange pour former le substrat en mousse biodégradable selon l'une quelconque des revendications 1 à 9.

12. Procédé selon la revendication 11, comprenant en outre l'étape d'ajout (110) d'un additif avant l'étape de chauffage.

13. Procédé selon l'une quelconque des revendications 11 ou 12, dans lequel l'agent d'expansion physique est du dioxyde de carbone, de l'azote, de l'argon, du MTBE, de l'air, de l'(iso)pentane, du propane, du butane, et similaires ou un mélange de ceux-ci, de préférence dans lequel la fourniture de l'agent de ramification et/ou de l'agent de réticulation comprend la fourniture de peroxyde de dicumyle, de peroxyde de di-*tert*-butyle, de peroxybenzoate de *tert-*butyle*,* de *tert*-peroxyacétate, de butadiène, de polymères dérivés de butadiène, de divinylbenzène, de benzoquinone, de sulfure de furfuryle, et similaires ou un mélange de ceux-ci.

14. Procédé selon l'une quelconque des revendications 11 à 13, dans lequel l'étape d'extrusion comprend une unique étape d'extrusion pour former le substrat en mousse extrudée d'un seul bloc.
